# EUROPÄISCHE PATENTANMELDUNG

(11) **EP 1 609 925 A1**
(43) Veröffentlichungstag der Anmeldung: **28.12.2005**
(21) Anmeldenummer: 05013664.7
(22) Anmeldetag: 24.06.2005
(51) Int. Cl.: E04B 9/34, E04B 9/04, E04B 9/22

(54) **Wand- und Deckenmodul mit Befestigungsvorrichtung**

(30) Priorität: 25.06.2004 DE 102004031032; 29.09.2004 DE 102004047917
(71) Anmelder: Marquardt, Horst, 71083 Herrenberg-Güllstein (DE)
(72) Erfinder: Marquardt, Horst, 71083 Herrenberg-Güllstein (DE)
(74) Vertreter: Schuster, Müller & Partner

(57) **Zusammenfassung**

Erfindungsgemäß besteht das Wand- und Deckenmodul aus einer Tragkonstruktion (2), die mit mindestens einem dekorativen Element (1) verbunden ist, das bzw. die die Tragkonstruktion (2) zumindest von der Blickseite her vollständig verdecken. Die der Blickseite abgewandte Seite der Tragkonstruktion (2) ist biegesteif mit der Befestigungsvorrichtung (4) verbunden. Die Befestigungsvorrichtung (4) ist mindestens zweiteilig ausgebildet.

## Beschreibung

### Stand der Technik

Die Erfindung geht aus von einem Wand- und Deckenmodul mit Befestigungsvorrichtung zur Gestaltung von Räumen, das mit Hilfe der Befestigungsvorrichtung an den Wänden und/oder Decken der Räume aber auch an jeder beliebigen tragenden Unterkonstruktion befestigt werden kann.

Bei der Gestaltung von Flächen und Räumen erfüllen Wand- und Deckenmodule die unterschiedlichsten Aufgaben. Am häufigsten haben sie die Funktion von Verkleidungen und dienen dabei selbst als architektonisches Gestaltungselement. In bestimmten Anwendungsfällen werden sie aber auch darüber hinaus noch mit technischen Funktionselementen, wie z. B. akustischen und/oder optischen Einrichtungen, gestalteten Oberflächen u. dgl. kombiniert. Wesentlich dabei ist, dass sie sich sicher an den Wänden, Decken oder tragenden Unterkonstruktionen, im folgenden allgemein als Unterkonstruktionen bezeichnet, befestigen lassen, was in der Regel mit einem hohen Konstruktions- und Montageaufwand verbunden ist.

Bekannt ist eine Deckenvertäfelung zur Bildung einer Rosette mit großem Durchmesser, bei der ein ring- oder scheibenförmiges inneres Tragelement und mindestens ein hierzu konzentrisch angeordnetes ringförmiges äußeres Tragelement an einer Decke eines Raumes befestigt sind. An dem inneren und äußeren Tragelement sind jeweils ein Segment der Rosette bildende Deckbretter befestigt, die aneinander angrenzen (DE 196 17 341 C2). Der Nachteil dieser Deckenvertäfelung besteht darin, dass der Befestigungsaufwand verhältnismäßig groß ist. Zunächst müssen die beiden Tragelemente an der Decke befestigt werden, und danach werden die einzelnen Deckbretter an diese angeschraubt. Diese Befestigungsart ist nicht geeignet, um unterschiedliche Abstände zur Unterkonstruktion zu ermöglichen. Außerdem muss die Decke aus größeren geschlossenen tragenden Bereichen bestehen, damit auch das äußere Tragelement befestigt werden kann.

Eine flexiblere Decken-Befestigungsvorrichtung für Dekorationselemente ist in der DE 34 10 974 C2 beschrieben. Sie besteht aus einem länglichen und quer zu seiner Längsausdehnung elastischen Profilelement, das in einen an der Decke befestigten Clip einrastet. Das oder die Dekorationselemente werden in einen nach unten offenen Profilhohlraum des Profilelements selbstrastend hineingedrückt. Nachteilig ist hierbei, dass für große Dekorationselemente mehrere Aufhängepunkte und damit mehrere Befestigungsvorrichtungen erforderlich sind. Außerdem sind zur Befestigung der Clips an der Decke spezielle mit der Decke verankerte Tragflansche erforderlich, auf die die Clips aufgeschoben werden, so dass die Decken-Befestigungsvorrichtung insgesamt sehr aufwändig ist. Problematisch ist auch das Entfernen größerer flächiger, die Befestigungsvorrichtung verdeckender Dekorationselemente, da nicht mehr erkennbar ist, an welcher Stelle sich die einzelnen Befestigungsvorrichtungen befinden, an der der hierzu erforderliche Eingriff zur Demontage erfolgen muss. Ein wesentlicher Nachteil besteht ferner darin, dass diese Befestigungsvorrichtung nur zur Befestigung von an Decken hängenden Dekorationselementen geeignet ist.

Eine ebenfalls sehr flexible, jedoch einfachere und daher weniger aufwändige Befestigung von Dekorationen tragenden Befestigungsteilen an Decken ist in der UK 2 261 018 A beschrieben. Die hakenförmigen Befestigungsteile besitzen eine Klebeschicht und werden mittels eines vom Boden aus handhabbaren, in das Befestigungsteil mittels eines Bajonettverschlusses einklinkbaren Werkzeugs gegen die Decke gedrückt. Auch bei dieser Erfindung bestehen die Nachteile in der eingeschränkten Anwendung nur für leichte Befestigungen im Deckenbereich sowie in dem von vorn herein festgelegten Abstand zur Decke.

### Die Erfindung und ihre Vorteile

Das erfindungsgemäße Wand- und Deckenmodul mit seinen kennzeichnenden Merkmalen des Anspruchs 1 hat demgegenüber den Vorteil, dass es sehr einfach aufgebaut ist und auch an jeder beliebigen Unterkonstruktion in jeder beliebigen Lage unkompliziert befestigt werden kann. Die Befestigungsvorrichtung ist so aufgebaut, dass auch sehr große Wand- und Deckenmodule ohne großen Aufwand, vor allem ohne Verwendung von Werkzeugen sicher befestigt und auch leicht und schnell wieder demontiert werden können. Selbst Wand- und Deckenmodule mit Abmessungen größer 1 m Durchmesser oder Kantenlänge lassen sich noch ohne Hilfsmittel, ggf. auch alleine montieren. Hinsichtlich der gestalterischen Merkmale sind dem Wand- und Deckenmodul keine Grenzen gesetzt. Je nach zulässiger Punktbelastung der jeweiligen Unterkonstruktion lassen sich die Wand- und Deckenmodule mit nur einer Befestigungsvorrichtung montieren, wodurch Kosten durch entfallenden Vorrichtungsaufwand und kürzere Montagezeiten eingespart werden können.

Nach einer vorteilhaften Ausgestaltung der Erfindung ist die Befestigungsvorrichtung lösbar mit der Tragkonstruktion verbunden. Das hat den Vorteil, dass Befestigungsvorrichtung und Wand- und Deckenmodul voneinander unabhängige Teile sind, demzufolge auch separat gefertigt werden können und auch beliebig austauschbar sind. Die montagefähige Verbindung muss allerdings eine biegesteife Verbindung beider Teile gewährleisten. Andererseits ist es natürlich auch möglich, das eine Teil der Befestigungsvorrichtung mit in die Tragkonstruktion zu integrieren, wobei dieses dann natürlich passend zum komplementären zweiten Teil der Befestigungseinrichtung ausgebildet sein muss.

Nach einer zusätzlichen vorteilhaften Ausgestaltung der Erfindung kann die Befestigungsvorrichtung auch verschiebbar mit der Tragkonstruktion verbunden sein. Dadurch ist ein exaktes Ausrichten des Wand- und Deckenmoduls möglich. Zur Gewährleistung der Verschiebbarkeit kann die Tragkonstruktion beispielsweise zwei parallele Führungsschienen aufweisen, die in jeweils einer Nut des einen Teils der Befestigungsvorrichtung geführt sind. Wenn diese Führungsschienen wiederum mit der Tragkonstruktion verschiebbar verbunden werden, und zwar rechtwinklig zur Bewegungsrichtung der Befestigungsvorrichtung in den Führungsschienen, ist eine flächige Ausrichtung des Wand- und Deckenmoduls möglich. Alle als Führung ausgebildeten Verbindungen müssen aber trotzdem eine biegesteife Verbindung von Tragkonstruktion und Befestigungsvorrichtung gewährleisten, d. h. die Führungen müssen selbsthemmend sein oder mit zusätzlichen Arretierungen versehen werden.

Nach einer zusätzlichen vorteilhaften Ausgestaltung der Erfindung kann die Befestigungsvorrichtung zur Einstellung einer Neigung des Wand- und Deckenmoduls auch winkelverstellbar sein. Auch hier gilt die Forderung nach Biegesteifheit der Verbindung.

Die Befestigungsvorrichtung zur Befestigung von Wand- und Deckenmodulen nach Anspruch 5 hat den Vorteil, dass sie einfach aufgebaut und auch auf einfache Weise handhabbar ist. Sie besteht aus mindestens zwei eigensteifen Teilen, wobei eines der Teile an der Unterkonstruktion befestigt wird. Das mindestens eine andere Teil wird mit dem Wand- und Deckenmodul verbunden. Die biegesteife lösbare Verbindung der beiden Teile miteinander kann durch an sich bekannt Mittel und Prinzipien erfolgen. Ein bekanntes selbstrastendes Prinzip ist beispielsweise der Bajonettverschluss.

Nach einer diesbezüglich vorteilhaften Ausgestaltung der Erfindung ist das mit der Tragkonstruktion verbundene Teil der Befestigungsvorrichtung lösbar mit dieser verbunden. Wand- und Deckenmodul und Befestigungsvorrichtung bilden demzufolge separate voneinander unabhängige Teile. Das hat den Vorteil, dass in Abhängigkeit von Gestalt und Größe der Wand- und Deckenmodule sowie den Gegebenheiten der Tragkonstruktion geeignete Befestigungsvorrichtungen ausgewählt bzw. aus geeigneten Einzelteilen zweckmäßig kombiniert werden können. Die lösbare Verbindung mit der Tragkonstruktion muss allerdings das Erfordernis der biegesteifen Eigenstabilität erfüllen.

Nach einer zusätzlichen vorteilhaften Ausgestaltung der Erfindung können Tragkonstruktion und Befestigungsvorrichtung auch verschiebbar miteinander verbunden werden. Dadurch lässt sich das Wand- und Deckenmodul zunächst in einer Richtung ausrichten. Hierzu sind sowohl an der Tragkonstruktion als auch dem entsprechenden Teil der Befestigungsvorrichtung Führungsflächen vorgesehen. Ebenso ist es auch möglich, eine zusätzliche Führung rechtwinklig zu der vorgenannten Führung vorzusehen. Dies kann dadurch erreicht werden, dass die Führungsteile der Tragkonstruktion innerhalb der Tragkonstruktion ebenfalls geführt sind. Ebenso ist es möglich, innerhalb der Befestigungsvorrichtung selbst eine Führung vorzusehen.

Nach einer zusätzlichen vorteilhaften Ausgestaltung der Erfindung bestehen die Teile der Befestigungsvorrichtung aus Hohlprofilen. Sie besitzen eine hohe Eigensteifigkeit und haben im Vergleich zu Vollmaterialien ein deutlich geringes Gewicht. Außerdem bieten sie die Möglichkeit des Ineinandersteckens, wodurch auf einfache Weise eine biegesteife Verbindung der Teile der Befestigungsvorrichtung möglich ist.

Nach einer diesbezüglich vorteilhaften Ausgestaltung der Erfindung werden als Hohlprofil Rohre verwendet. Rohre sind nicht nur preiswert, sondern bieten auch die Möglichkeit des Verdrehens der Teile der Befestigungsvorrichtung, so dass dadurch eine zusätzliche Möglichkeit der Ausrichtung der Wand- und Deckenmodule gegeben ist. Diese Art der Ausrichtung ist erforderlich, wenn es sich bei den dekorativen Elementen der Wand- und Deckenmodule um Polygone handelt oder ein ganz bestimmter Musterverlauf erreicht werden soll.

Nach einer zusätzlichen vorteilhaften Ausgestaltung der Erfindung werden die Teile der Befestigungsvorrichtung selbstrastend bzw. selbstfixierend miteinander verbunden. Das hat den Vorteil, dass die biegesteife Verbindung ohne Verwendung von Werkzeugen gewährleistet ist. Möglichkeiten solcher Verbindungen sind hinreichend bekannt, beispielsweise Bajonettverschlüsse, selbsthemmende Passungen, mechanische Rastverbindungen, z. B. Zahnungen, und dgl.

Nach einer zusätzlichen vorteilhaften Ausgestaltung der Erfindung sind die Teile der Befestigungsvorrichtung länger als allein für die Befestigung notwendig ausgebildet und axial zueinander verschiebbar. Dadurch wird eine Veränderung des Abstandes der Wand- und Deckenmodule zur Unterkonstruktion erreicht. Besonders einfach lässt sich eine solche Verbindung durch die bereits erwähnte Verwendung von Hohlprofilen erreichen. Es versteht sich von selbst, dass bei jeder Abstandspositionen die Bedingung der Biegesteifigkeit der Verbindung gewährleistet sein muss. Diese ist durch die bereits zuvor beschriebenen Mittel möglich. Beispielsweise mehrere hintereinander angeordnete Bajonettverschlüsse, ein längerer verzahnter Bereich eines der Teile der Befestigungsvorrichtung u. dgl. Bei sehr schweren Wand- und Deckenmodulen müssen die einzelnen Abstandspositionen mechanisch so sicher sein, dass ein Selbstlösen aus der eingerichteten Position nicht möglich ist. Hier kann es sich ggf. erforderlich machen, zum Lösen der Arretierung der Befestigungsvorrichtung Hilfsmittel zu verwenden.

Nach einer zusätzlichen vorteilhaften Ausgestaltung der Erfindung sind mindestens zwei Teile der Befestigungsvorrichtung winkelverstellbar miteinander verbunden. Dadurch kann der Wand- und Deckenmodul in seiner Ebene geneigt zur Unterkonstruktion angebracht werden.

Die gleiche Wirkung wird in einer diesbezüglich anderen vorteilhaften Ausgestaltung der Erfindung dadurch erreicht, dass mindestens eines der Teile der Befestigungsvorrichtung ein Gelenk aufweist, während die Verbindung der Teile starr oder nur axial einstellbar ist. Um ein Kippen des Wand- und Deckenmoduls in mehr als einer Ebene zu ermöglichen, müssen mindestens zwei Gelenke oder ein in mehreren Richtungen bewegliches Gelenk in der Befestigungsvorrichtung vorhanden sein.

Weitere Vorteile und vorteilhafte Ausgestaltungen der Erfindung sind der nachfolgenden Beispielbeschreibung, den Zeichnung und den Ansprüchen entnehmbar.

### Zeichnung

Ein Ausführungsbeispiel der Erfindung ist in den Zeichnungen dargestellt und im Folgenden näher beschrieben. Es zeigen
- Fig. 1: ein Wand- und Deckenmodul mit Tragkonstruktion und Befestigungsvorrichtung in montierter Position,
- Fig. 2: die Tragkonstruktion des Wand- und Deckenmoduls mit der zugehörigen Verbindungshülse der Befestigungsvorrichtung in drei Ansichten,
- Fig. 3: die Verbindungshülse in zwei Ansichten und
- Fig. 4: das Deckenbefestigungselement der Befestigungsvorrichtung in zwei Ansichten

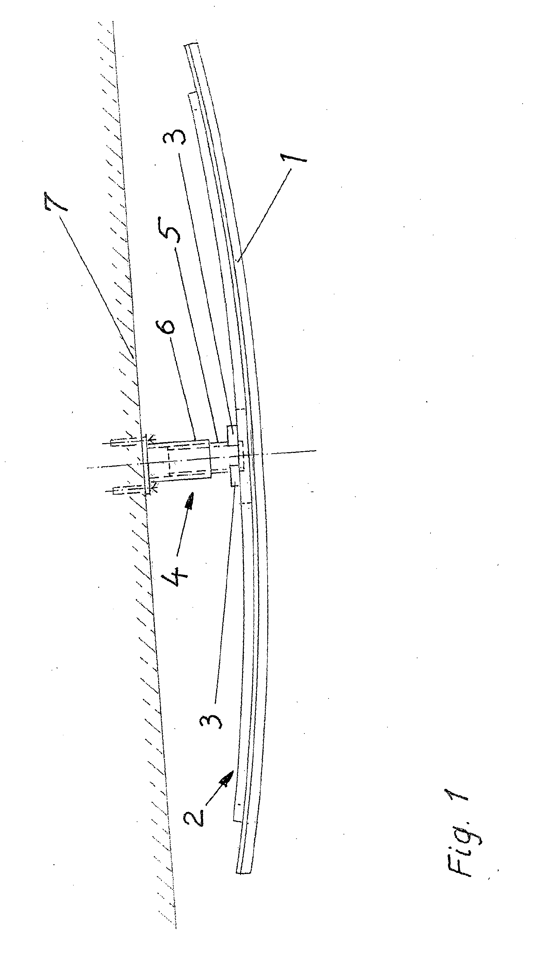

Das in Fig. 1 dargestellte Wand- und Deckenmodul besteht aus einem dekorativen Element 1, das an einer Tragkonstruktion 2 befestigt ist. Im vorliegenden Beispiel ist es als eine kalottenartig gekrümmte rechteckige Dekorplatte ausgebildet. Sie wird von oben an der Tragkonstruktion 2 befestigt, so dass die Befestigungsmittel für den Betrachter nicht sichtbar sind. Hierzu besteht die Tragkonstruktion 2 aus einem Profilrahmen, auf dem zwei Tragprofile 3 mit Abstand zueinander fest aufgesetzt sind. Mit der Tragkonstruktion 2 ist eine Befestigungsvorrichtung 4 verbunden, die aus einer Verbindungshülse 5 und einem Befestigungselement 6 besteht, wobei die Verbindungshülse 5 mittig in dem Zwischenraum zwischen den beiden Tragprofilen 3 befestigt und mit ihrem freien Ende lösbar in das Befestigungselement 6 eingeschoben ist. Das Befestigungselement 6 ist an einer Decke 7 angeschraubt.

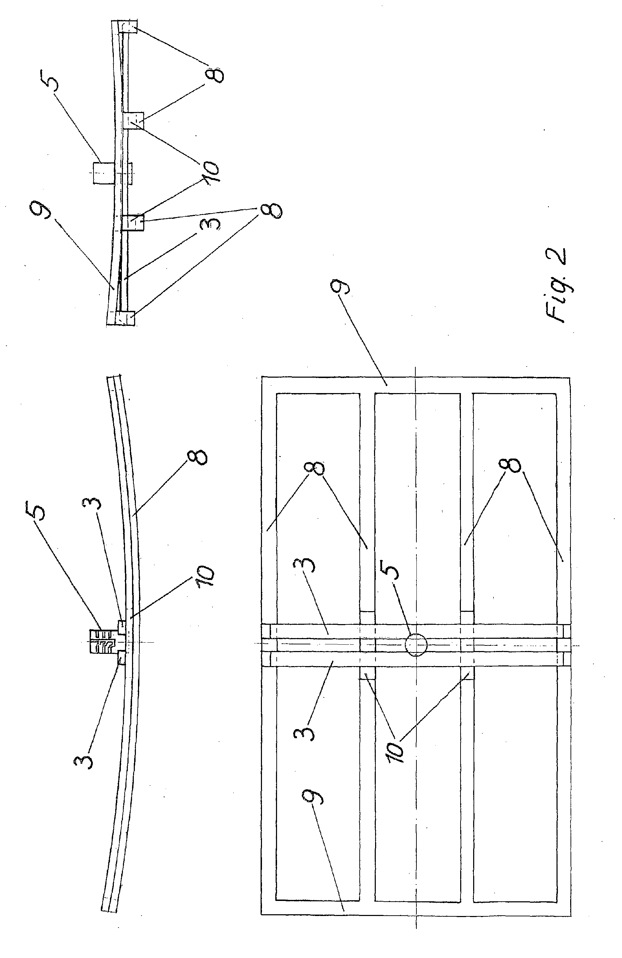

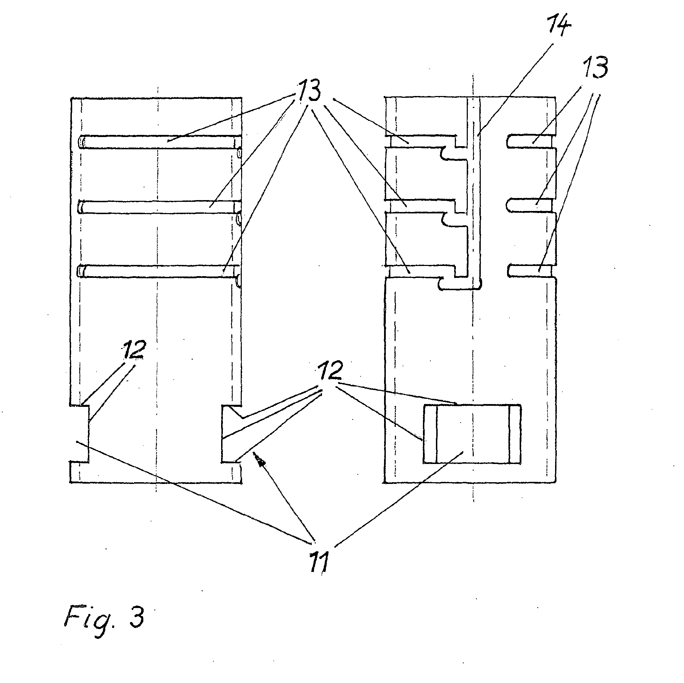

Aus der in Fig. 2 dargestellten Tragkonstruktion 2 ist die Wölbung des Wand- und Deckenmoduls erkennbar. Der Profilrahmen der Tragkonstruktion 2 besteht aus vier gekrümmten Längsprofilen 8, die an ihren Enden durch zwei Querprofile 9 miteinander verbunden sind. Außerdem sind die Längsprofile 8 in ihrer Mitte durch die beiden Tragprofile 3 miteinander verbunden, wobei sich zwischen den Tragprofilen 3 und den beiden inneren Längsprofilen 8 jeweils ein Distanzprofil 10 befindet. Dadurch wird die Krümmung der Tragkonstruktion 2 in der zweiten Achse, d. h. über ihre Breite realisiert. Die Verbindungshülse 5 ist im vorliegenden Beispiel nur auf der kurzen Distanz zwischen den beiden inneren Längsprofilen 8 verschiebbar. Durch eine entsprechende Gestaltung der inneren Profilflächen der beiden inneren Längsprofile 8, beispielsweise durch das Anbringen einer Führungsschiene, ließe sich die Verbindungshülse 5 von außen auf die Tragprofile 3 aufschieben. Eine mögliche Gestaltung der Führung der Verbindungshülse 5 ist in Fig. 3 in zwei Ansichten gezeigt. Durch zwei gegenüberliegende Ausklinkungen 11 im Mantel der Verbindungshülse 5 kurz unterhalb ihres Fußes entstehen jeweils zwei waagerechte und zwei senkrechte Führungskanten 12, die die inneren Profilflächen der Tragprofile 3 umfassen. Die Verbindungshülse 5 muss mit den Tragprofilen 3 biegesteif verbunden sein, da über sie das Gewicht des Wand- und Deckenmoduls auf die Unterkonstruktion übertragen wird. Dazu kann die Verbindungshülse 5 lösbar oder auch unlösbar an den Tragprofilen 3 befestigt sein. Eine lösbare Verbindung ist wiederum selbsthaltend, also mittels einer Passung zwischen den Führungskanten 12 und den Flächen der Tragprofile 3, oder mit einer zusätzlichen Arretiervorrichtung realisierbar. Wie aus Fig. 3 ferner zu erkennen ist, sind in den Mantel der Verbindungshülse 5 mehrere nicht durchgehende radiale Schlitze 13 sowie zwei sich genau gegenüberliegende etwa von der Hälfte der Verbindungshülse 5 zu ihrem oberen Ende reichende axiale Schlitze 14 eingebracht. Jeweils zwei radiale Schlitze 13 sind in der gleichen Höhe angeordnet und münden mit ihrem einen Ende jeweils in einen der beiden axialen Schlitz 14. Bevor sie in die axialen Schlitze 14 münden, sind sie zweimal um 90° abgewinkelt, wodurch die radialen Schlitze 13 eine axiale Höhenverschiebung erfahren.

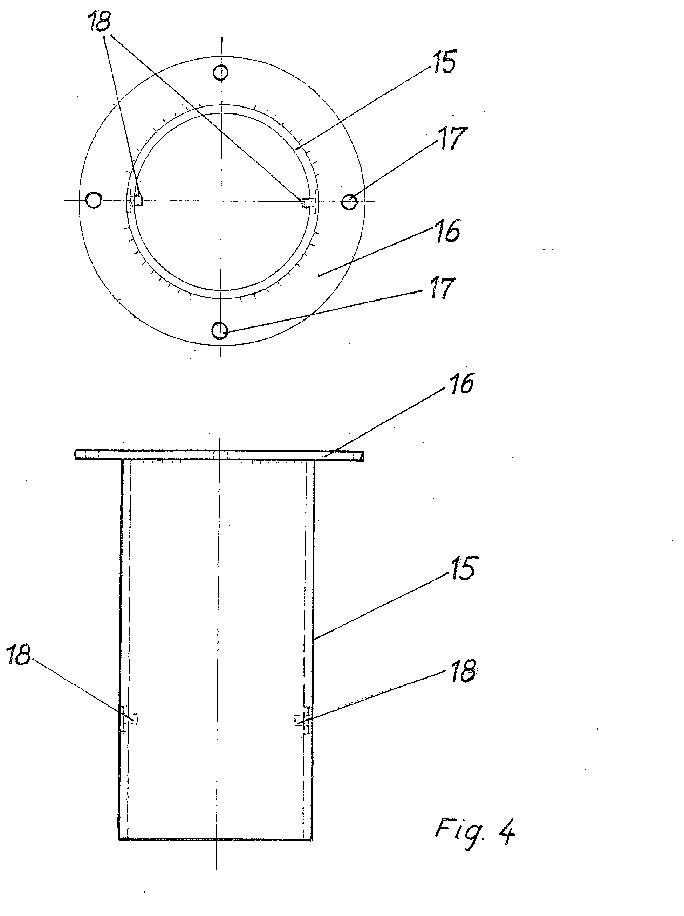

Fig. 4 zeigt das Befestigungselement 6 in zwei Ansichten. Es besteht aus einer zylindrischen Wandung 15 und einen Flansch 16. Zur Montage des Befestigungselements 6 weist sein Flansch 16 vier Durchgangsbohrungen 17 auf, durch die Befestigungsmittel in eine Unterkonstruktion, beispielsweise der Decke 7 oder einer Wand, geschraubt werden. Etwa in Höhe des unteren Drittels des Befestigungselements 6 sind diametral gegenüberliegend zwei Bolzen 18 so in seine Wandung 15 eingebracht, dass sie nach innen in den zylindrischen Hohlraum hineinragen.

Die nachfolgende Beschreibung der Montage des Wand- und Deckenmoduls betrifft eine Befestigung an der Decke 7. In diesem Fall wird das Befestigungselement 6 mit seinem Flansch 16 an der Decke 7 befestigt. Das Wand- und Deckenmodul selbst ist eine Baugruppe, die aus dem dekorativen Element 1, der Tragkonstruktion 2 und der Verbindungshülse 5 besteht. Das Wand- und Deckenmodul wird nun mit der Verbindungshülse 5 in das an der Decke montierte Befestigungselement 6 eingeschoben, wobei es in eine solche radiale Position gebracht werden muss, dass die beiden axialen Schlitze 14 mit den beiden Bolzen 18 fluchten. Danach wird die Verbindungshülse 5 bis in die gewünschte Höhe, d. h. in die Höhe einer der drei radialen Schlitze 13, in das Befestigungselement 6 hinein geschoben. Durch eine leichte Drehbewegung in Richtung der radialen Schlitze 13 gelangen die Bolzen 18 in den Bereich der Abwinkelung der radialen Schlitze 13. Nun kann das Wand- und Deckenmodul losgelassen werden, so dass die Verbindungshülse 5 an den Bolzen 18 das kurze senkrechte Stück der Abwinkelung der radialen Schlitze 13 nach unten gleitet und dann durch den Anschlag der Oberkante der radialen Schlitze 13 an den Bolzen 18 in der Position verharrt. Das Wand- und Deckenmodul kann zur radialen Ausrichtung nun noch innerhalb der Ebene des waagerechten Verlaufs des radialen Schlitzes 13, in den es eingerastet ist, gedreht werden. Mit Hilfe an sich bekannter Mittel zur Arretierung wird es in der gewünschten Position festgesetzt. Um dies auch ohne den Gebrauch von Werkzeugen zu ermöglichen, kann die Unterkante der radialen Schlitze 13 zahnartig ausgebildet sein. In die Zahnlücken, deren Breite und Tiefe dem Durchmesser der Bolzen 18 angepasst sein muss, rasten dann die Bolzen 18 ein. Die Demontage des Wand- und Deckenmoduls erfolgt in umgekehrter Reihenfolge.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Dekorative Element
- 2: Tragkonstruktion
- 3: Tragprofile
- 4: Befestigungsvorrichtung
- 5: Verbindungshülse
- 6: Befestigungselement
- 7: Decke
- 8: Längsprofil
- 9: Querprofil
- 10: Distanzprofil
- 11: Ausklinkung
- 12: Führungskante
- 13: Radialer Schlitz
- 14: Axialer Schlitz
- 15: Wandung
- 16: Flansch
- 17: Durchgangsbohrungen
- 18: Bolzen

## Patentansprüche

1. Wand- und Deckenmodul mit Befestigungsvorrichtung zur Befestigung an einer Unterkonstruktion, bestehend aus mindestens einem sichtbaren dekorativen Element, das mit der Befestigungsvorrichtung so verbindbar ist, dass diese nach der Montage für einen Betrachter unsichtbar ist,
**dadurch gekennzeichnet,**
- **dass** das Wand- und Deckenmodul aus einer Tragkonstruktion (2) besteht, die mit dem mindestens einen dekorativen Element (1) verbunden ist, das bzw. die die Tragkonstruktion (2) zumindest von der Blickseite her vollständig verdecken,
- **dass** die der Blickseite abgewandte Seite der Tragkonstruktion (2) biegesteif mit der Befestigungsvorrichtung (4) verbunden ist und
- **dass** die Befestigungsvorrichtung (4) mindestens zweiteilig ausgebildet ist, wobei ein Teil starr mit der Unterkonstruktion und mindestens ein anderes Teil der Befestigungsvorrichtung (4) biegesteif mit der Tragkonstruktion (2) verbindbar ist und beide Teile Mittel zum gegenseitigen biegesteifen Verbinden und Fixieren aufweisen.

2. Wand- und Deckenmodul nach Anspruch 1,
**dadurch gekennzeichnet,**
**dass** die Befestigungsvorrichtung (4) lösbar mit der Tragkonstruktion (2) verbunden ist.

3. Wand- und Deckenmodul nach Anspruch 1 oder 2,
**dadurch gekennzeichnet,**
**dass** die Befestigungsvorrichtung (4) verschiebbar mit der Tragkonstruktion (2) verbunden ist.

4. Wand- und Deckenmodul nach Anspruch 1, 2 oder 3,
**dadurch gekennzeichnet,**
**dass** die Befestigungsvorrichtung (4) winkelverstellbar ist.

5. Befestigungsvorrichtung für Wand- und Deckenmodul zur Befestigung desselben an einer Unterkonstruktion,
**dadurch gekennzeichnet,**
**dass** die Befestigungsvorrichtung (4) aus mindestens zwei Teilen besteht, wobei ein Teil starr mit der Unterkonstruktion und mindestens ein anderes Teil der Befestigungsvorrichtung (4) mit der Tragkonstruktion (2) des Wand- und Deckenmoduls biegesteif verbindbar ist und beide Teile Mittel zum gegenseitigen biegesteifen Verbinden und Fixieren aufweisen.

6. Befestigungsvorrichtung nach Anspruch 5,
**dadurch gekennzeichnet,**
**dass** das mit der Tragkonstruktion (2) verbundene Teil lösbar mit dieser verbunden ist.

7. Befestigungsvorrichtung nach Anspruch 5 oder 6,
**dadurch gekennzeichnet,**
**dass** das mit der Tragkonstruktion (2) verbundene Teil verschiebbar mit dieser verbunden ist.

8. Befestigungsvorrichtung nach einem der Ansprüche 5 bis 7,
**dadurch gekennzeichnet,**
**dass** die Teile der Befestigungsvorrichtung (4) aus Hohlprofilen bestehen.

9. Befestigungsvorrichtung nach Anspruch 8,
**dadurch gekennzeichnet,**
**dass** die Teile der Befestigungsvorrichtung (4) aus Rohren bestehen.

10. Befestigungsvorrichtung nach einem der Ansprüche 5 bis 9,
**dadurch gekennzeichnet,**
**dass** die Teile der Befestigungsvorrichtung (4) ineinandersteckbar sind.

11. Befestigungsvorrichtung nach einem der Ansprüche 5 bis 10,
**dadurch gekennzeichnet,**
**dass** die Mittel der Teile zum gegenseitigen biegesteifen Verbinden und Fixieren selbstrastend und selbstfixierend sind.

12. Befestigungsvorrichtung nach einem der Ansprüche 5 bis 11,
**dadurch gekennzeichnet,**
**dass** die Teile der Befestigungsvorrichtung (4) in unterschiedlichen Positionen zueinander fixierbar sind.

13. Befestigungsvorrichtung nach einem der Ansprüche 5 bis 12,
**dadurch gekennzeichnet,**
**dass** mindestens zwei der Teile der Befestigungsvorrichtung (4) winkelverstellbar miteinander verbindbar sind.

14. Befestigungsvorrichtung nach einem der Ansprüche 5 bis 12,
**dadurch gekennzeichnet,**
**dass** mindestens eines der Teile der Befestigungsvorrichtung (4) winkelverstellbar ist.
